# EUROPÄISCHE PATENTSCHRIFT

(11) **EP 3 056 311 B1**
(45) Veröffentlichungstag und Bekanntmachung des Hinweises auf die Patenterteilung: **31.01.2018**
(21) Anmeldenummer: 15155201.5
(22) Anmeldetag: 16.02.2015
(51) Int. Cl.: B23Q 3/06, B23Q 7/00, B29L 31/26, B29L 31/00, B29C 65/78, B29D 99/00, B29C 65/00, B29C 65/02

(54) **Verfahren zur Fertigung einer Profildichtung aus einem Profildichtungsrohling**
Process for producing a profile seal from a profile seal blank
Procédé de production d'un joint profilé à partir d'un joint profilé brute

(43) Veröffentlichungstag der Anmeldung: 17.08.2016
(73) Patentinhaber: Stefan Pfaff Werkzeug- und Formenbau GmbH Co KG, 88167 Röthenbach im Allgäu (DE)
(72) Erfinder: Reiners, Alexander, 41372 Niederkrüchten (DE); Sutter, Anton, 88171 Weiler-Simmerberg (DE)
(74) Vertreter: Otten, Roth, Dobler & Partner mbB Patentanwälte

(56) Entgegenhaltungen:
- DE-A1- 10 021 055
- DE-A1- 10 232 447
- DE-A1-102005 039 214
- DE-A1-102013 106 427
- US-A- 4 780 943
- US-A1- 2008 096 003

## Beschreibung

Die Erfindung betrifft ein Verfahren zur Fertigung einer Profildichtung aus einem Profildichtungsrohling nach dem Oberbegriff des Anspruchs 1.

### Stand der Technik

Dichtungen, insbesondere biegeschlaffe Profildichtungen, zur Vermeidung von unerwünschten Stoffübergängen zwischen zwei Räumen sind in einer Vielzahl von unterschiedlichen Ausführungsformen bekannt. Biegeschlaffe Dichtungen weisen regelmäßig ein niedriges Elastizitätsmodul und geringe Dehnsteifigkeit auf, sodass große Verformungen bereits infolge geringer Kraft- und Momentbeanspruchung möglich sind.

Derartige Profildichtungen werden beispielsweise im Fahrzeugbau, insbesondere im Bereich von Fahrzeugtüren eingesetzt, wobei diese Profildichtungen ein hohes Maß an Flexibilität und Formstabilität aufweisen sollten.

Aufgrund der Vielzahl von unterschiedlichen Ausführensformen einer Fahrzeugtür sind derartige Profildichtungen durch entsprechende Bearbeitungen anzupassen, für welche teilweise besondere Bearbeitungs-/ und Beförderungstechniken erforderlich sind.

Aus dem Stand der Technik ist das Dokument US 4 780 943 A bekannt, das ein Verfahren zur Fertigung einer Profildichtung aus einem Profildichtungsrohling mit den Merkmalen des Oberbegriffs des Anspruchs 1 offenbart. Zur Bearbeitung und Beförderung derartiger Profildichtungen werden diese üblicherweise mit einem so genannten integrierten Träger (engl.: Carrier) versehen, welcher aufwendig in die jeweils zu bearbeitende Profildichtung eingezogen werden muss, um das Profil bzw. die Profildichtung am Fahrzeug zu befestigen.

Aufgabe der Erfindung ist es, die Herstellung einer Profildichtung mit biegeschlaffen Eigenschaften hinsichtlich der Fertigungszeit und den Herstellkosten zu verbessern.

Diese Aufgabe wird, ausgehend von einem Fertigungsverfahren der eingangs genannten Art, durch die kennzeichnenden Merkmale des Anspruchs 1 gelöst.

Vorteilhafte Weiterbildungen sowie zweckmäßige Ausgestaltungen sind durch die abhängigen Ansprüche möglich.

### Beschreibung der Erfindung

Das erfindungsgemäße Verfahren umfasst eine Profilhalterung zur Handhabung und zum Transport eines Profildichtungsrohlings in einem wenigstens teilweise automatisierten Fertigungsprozess, wobei der Profildichtungsrohling vorzugsweise biegeschlaffe Eigenschaften aufweist.

Der Kern der Erfindung liegt darin, dass die Profilhalterung wenigstens eine Klemmbacke umfasst, welche form-/ oder kraftschlüssig an wenigstens einer Teilfläche des Profildichtungsrohlings anliegt. Bei einer vorteilhaften Weiterbildung der Erfindung sind wenigstens zwei Klemmbacken vorgesehen, um einen Teil des Profildichtungsrohling zu fassen, wobei insbesondere die Klemmbahnen derart angeordnet sind, dass sie am zu fassenden Teil des Profildichtungsrohlings an gegenüberliegenden Seiten anliegen. Auf diese Weise kann eine besonders effektive Kraftübertragung auf das Profil beim Transport ermöglicht werden.

Durch die erfindungsgemäße Profilhalterung können Profildichtungen mit unterschiedlichen Profilformen, welche biegeschlaffe Eigenschaften aufweisen, während einer Bearbeitung der Profildichtung in der Profilhalterung gehalten werden, um eine gegenüber dem Stand der Technik präzisere Bearbeitung durch entsprechende Bearbeitungsschritte an der Profildichtung vornehmen zu können, damit die Profildichtung nicht zwischen den einzelnen Fertigungsschritten entnommen und neu eingelegt werden muss. Die Profilhalterung verbessert die formstabilen Eigenschaften des Profildichtungsrohlings während der Bearbeitung, welche mit einem Profildichtungsrohling mit einem integrierten Träger vergleichbar sind. Ein Träger bzw. Carrier kann bei der Erfindung, insbesondere bei einer Automatisierung, das Handling in vorteilhafter Weise sehr vereinfachen.

Dabei kann auch die Flexibilität des Rohlings erhalten bleiben.

Darüber hinaus wird der Transport durch die erfindungsgemäße Profilhalterung zwischen einzelnen Bearbeitungsstationen derart verbessert, dass die zeit- und kostenaufwändige Entnahme des Rohlings aus einer Bearbeitungsstation von Hand sowie Transport und Einlegen in einer nachfolgenden Bearbeitungsstation entfallen können.

Insbesondere kann die Handhabung des Profildichtungsrohlings beim Transport/ bei der Bearbeitung entscheidend verbessert werden.

Ferner werden durch die form- und/oder kraftschlüssig an wenigstens einer Teilfläche des Profildichtungsrohlings anliegenden Klemmbacken der Profilhalterung Bearbeitungen an unterschiedlichen Positionen des Profildichtungsrohlings ermöglicht. Die Klemmbacke bzw. Klemmbacken kann/können beispielsweise balkenförmig (als Klemmbalken) ausgebildet sein, um entlang des Profils des Dichtungsrohlings anliegen zu können, wodurch ein formschlüssiges Anliegen ermöglicht wird, ohne zum Beispiel den Dichtungsrohling einzudrücken. Die Halterung des Profils kann also dadurch erreicht werden, dass durch die Profilhalterung bzw. die Klemmbacke eine geometrische Zwangsvorgabe vorliegt. Des Weiteren können auch Reibungskräfte die Halterung unterstützen. Bei kraftschlüssiger Halterung kann auch direkt eine Kraft auf das Profil ausgeübt werden.

In einer zweckmäßigen Weiterbildung der erfindungsgemäßen Profilhalterung weist diese Bearbeitungsausnehmungen zur Bearbeitung des Profildichtungsrohlings auf. Die Bearbeitungsausnehmungen ermöglichen ein Bearbeiten des in der Profilhalterung angeordneten Profildichtungsrohlings, wodurch ein zeitaufwändiges Umspannen des Profildichtungsrohlings in der Profilhalterung vermieden werden kann. Die Bearbeitungsausnehmungen können praktisch an jeder zu bearbeitenden Stelle angeordnet sein.

Überdies ist es in einer weiteren Ausgestaltung der Erfindung vorgesehen, dass die Profilhalterung derart ausgebildet ist, dass der Profildichtungsrohling zur Bearbeitung die Profilhalterung an ihren Längs- und/oder Stirnkanten überragt. Durch diese Ausführungsform der Profilhalterung kann zusätzlich zu einer Bearbeitung an den Bearbeitungsausnehmungen der Profilhalterung ebenfalls eine Bearbeitung in den Endbereichen des in der Profilhalterung angeordneten Profildichtungsrohlings erfolgen, beispielsweise ein Beschneiden des Profildichtungsrohlings oder ein Erwärmen der Endbereiche für einen nachfolgenden thermischen Fügevorgang zur Herstellung einer Endlosdichtung.

In einer weiteren bevorzugten Ausgestaltung der Erfindung umfasst die Profilhalterung einen Grundrahmen zur Lagerung des/der Klemmbacken. Der Grundrahmen wiederum kann dazu genutzt werden, eine gute Handhabung beim Transport, insbesondere beim automatisierten Transport während der Bearbeitung bzw. Fertigung der Dichtung zu ermöglichen. Außerdem können die Klemmbacken, welche am Grundrahmen befestigt sind, in der Regel einfach ausgetauscht werden, etwa bei einer Wartung oder dann, wenn ein anderes Profil bearbeitet werden soll.

Die Klemmbacken können beispielsweise über Hydraulik- und/oder Pneumatikzylinder linear bewegt werden, um einen Klemmvorgang an dem Profildichtungsrohling, beispielsweise an einer Dichtlippe des Profildichtungsrohlings, auszuführen.
Darüber hinaus können die Klemmbacken durch Anordnung von Führungsprofilen, beispielsweise ein Schwalbenschwanz, in entsprechend angeordneten Führungsnuten im Grundrahmen geführt werden, wenn diese eine Linearbewegung ausführen. Aufgrund der Lagerung der Klemmbacken innerhalb des Grundrahmens ist es möglich, dass diese während der kompletten Bearbeitung des Profildichtungsrohlings mitgeführt werden können.

In einem weiteren Aspekt des erfindungsgemäßen Verfahrens ist eine Transportvorrichtung zum Transport eines Profildichtungsrohlings in einem wenigstens teilweise automatisierten Fertigungsprozess vorgesehen, wobei die Transportvorrichtung eine Aufnahmevorrichtung zur Aufnahme einer Profilhalterung umfasst. Die Transportvorrichtung für einen solchen Bearbeitungsprozess eines Profildichtungsrohlings ermöglicht zum Beispiel einen Lineartransport des Profildichtungsrohlings, denkbar sind aber auch nicht-lineare Verfahrwege. Für den Transport kann ein Roboter eingesetzt werden. Zudem ist denkbar, dass der Profildichtungsrohling bei der Bearbeitung gedreht oder in sonstiger Weise zur Bearbeitung positioniert werden muss. Für eine Bearbeitung des Profildichtungsrohlings wird dieser zusammen mit der entsprechenden Profilhalterung mittels einer entsprechenden Aufnahmevorrichtung auf der Transportvorrichtung angeordnet. Als Aufnahmevorrichtung können beispielsweise elektrisch-, hydraulisch-, pneumatisch- und/oder mechanisch betätigbare Vorrichtungen verwendet werden, um eine Anordnung der Profilhalterung auszuführen.

Überdies ist es in einer weiteren, bevorzugten Ausgestaltung der Erfindung vorgesehen, dass die Profilhalterung in die Transportvorrichtung integriert ist. Eine in die Transportvorrichtung integrierte Profilhalterung wird beispielsweise bei der Bearbeitung von Profildichtungsrohlingen in Großserien eingesetzt. Dadurch kann auf eine zusätzliche Aufnahmevorrichtung zur wechselweisen Aufnahme unterschiedlicher Profilhalterungen verzichtet werden, da die erforderlichen Elemente der Profilhalterung, wie zum Beispiel der Grundrahmen, sowie die linear bewegbaren Klemmbacken in der Transportvorrichtung integriert sind. Erfindungsgemäß wird die gesamte Profilhalterung an ein entsprechendes Transportsystem (zum Beispiel ein Roboter) übergeben. Dies hat den Vorteil, dass mehrere Profilhalterungen zeitgleich im Transportsystem transportiert werden können, was zu einer Reduzierung von Transportzeiten der zu bearbeitenden Profildichtungen im Transportsystem führen kann. Außerdem können verschiedenartige Profilhalterungen im Transportsystem eingesetzt werden.

In einer überdies bevorzugten Ausgestaltung der Erfindung ist es vorgesehen, dass die Transportvorrichtung Mittel zur Bewegung und/oder zur Positionierung der Profilhalterung und/oder zur Bearbeitung des Profildichtungsrohlings aufweist. Als Bewegungsmittel können im Allgemeinen jegliche Mittel verwendet werden, welche zur Ausführung einer Linear-, Dreh-, Hub- und/oder Kippbewegung geeignet sind (insbesondere entsprechende Roboter). Aufgrund der angeordneten Bewegungsmittel kann der in der Profilhalterung angeordnete Profildichtungsrohling für eine Bearbeitung an einer schwer zugänglichen Stelle des Profildichtungsrohlings in eine exakte Bearbeitungsposition bewegt werden.

Überdies ist es in einer weiteren Ausgestaltung der Erfindung vorgesehen, dass eine Ladestation vorgesehen ist, welche dazu ausgebildet ist, den biegeschlaffen Profildichtungsrohling in die Profilhalterung einzubringen.

Der Profildichtungsrohling wird beispielsweise in einem Magazin gelagert und automatisiert an die Profilhalterung übergeben. Diese automatisierte Übergabe des Profildichtungsrohlings wird dann mittels einer Ladestation ausgeführt, welche beispielsweise an einem freien Ende Profildichtungsrohling angreift und diesen durch eine Linearbewegung in die Profilhalterung zieht. In die Ladestation kann ein Greifer zur Handhabung des Profildichtungsrohlings integriert sein. Die Ladestation kann auch einen oder mehrere Profildichtungsrohlinge zwischenlagern, wodurch die Verarbeitung beschleunigt und flexibler gestaltet werden kann.

Grundsätzlich sind verschiedene Varianten denkbar, wie eine Relativbewegung zwischen dem Profildichtungsrohling und der Profilhalterung realisiert werden kann. Die Ladestation haltert den Profildichtungsrohling. Die Einbringung des Profildichtungsrohlings in die Profilhalterung kann entweder so erfolgen, dass sich die Ladestation mit dem Profildichtungsrohling bewegt, während die Profilhalterung feststeht oder umgekehrt, dass die Profilhalterung bewegt wird, während die Ladestation mit dem Profildichtungsrohling feststeht. Es kann also sowohl der Profildichtungsrohling in die Profilhalterung geschoben werden, als auch umgekehrt, die Profilhalterung wird auf den Profildichtungsrohling geschoben. Ein Roboter kann den Transport des Profils zu den einzelnen Arbeitsstationen durchführen. Daneben ist es auch denkbar, dass nur der Profildichtungsrohling bewegt wird, während die Ladestation in die Profilhalterung feststehen.

Zur Handhabung des Profildichtungsrohlings kann der Greifmechanismus zur Handhabung des Profildichtungsrohlings unmittelbar eine Profilhalterung umfassen. Durch diese Maßnahme, dass die Profilhalterung sogleich den Greifvorgang des Profildichtungsrohlings übernimmt, kann eine Vereinfachung der Fertigung erfolgen, weil kein zusätzlicher Greifer vorgesehen sein muss und die Mittel zum Greifen des Profildichtungsrohlings nicht ausgetauscht werden müssen, weil stets die zu verwendende Profilhalterung dies übernimmt.

Ferner sieht die Erfindung in einer weiteren, bevorzugten Ausführungsform vor, dass die Ladestation einen Gegenhalter zum Halten eines Profildichtungsrohlings aufweist.

Während der Übergabe des Profildichtungsrohlings von dem Magazin zur Profilhalterung wird dieser mittels eines in der Ladestation angeordneten Gegenhalters gehalten und vor einem unbeabsichtigten Herausfallen gesichert.

In einer Ausgestaltung der Erfindung ist vorgesehen, dass die Transportvorrichtung dazu ausgebildet ist, den Gegenhalter mit dem Profildichtungsrohling mitzuführen. Der zum Halten eines Profildichtungsrohlings angeordnete Gegenhalter wird sodann bei der Übergabe des Profildichtungsrohlings an die Profilhalterung ebenfalls weitergegeben, wodurch eine positionsgenaue und formstabile Führung des Profildichtungsrohlings während der Übergabe an die Profilhalterung ermöglicht werden kann. Denkbar sind aber auch Transportvorrichtungen, bei denen der Gegenhalter in der Ladestation verbleibt. Wird der Rohling transportiert, so kann der Gegenhalter auch kurzzeitig vom Rohling entfernt werden und dann wieder mit dem Rohling in Kontakt treten, wenn der Transportvorgang beendet ist und der Rohling gehalten werden soll. Erfindungsgemäß ist ein Verfahren zur Fertigung einer Profildichtung aus einem Profildichtungsrohling vorgesehen, welcher vorzugsweise biegeschlaffe Eigenschaften aufweist, wobei der Profildichtungsrohling in einer Profilhalterung aufgenommen und gehalten wird. Aufgrund des erfindungsgemäßen Verfahrens kann eine automatisierte Bearbeitung eines biegeschlaffen Profildichtungsrohlings ausgeführt werden. Der Vorteil des erfindungsgemäßen Verfahrens ist die mögliche zeitsparende und kostengünstige Bearbeitung eines biegeschlaffen Profildichtungsrohlings in einem zumindest teilweise automatisierten Bearbeitungsprozess, da ein manueller Transport und Ausrichten der Profildichtungsrohlinge, welche sonst zumindest in Teilabschnitten notwendig wären, entfällt. Erfindungsgemäß sieht das Verfahren einen Transport der Profilhalterung zum und/oder im Fertigungsprozess vor. Weiterhin sieht eine Ausführungsform des Verfahrens gemäß der Erfindung das Positionieren der Profilhalterung und das Bearbeiten des Profildichtungsrohlings vor.

Das erfindungsgemäße Verfahren ermöglicht ein zeitsparendes Bearbeiten eines Profildichtungsrohlings in einem zumindest teilweise automatisierten Bearbeitungsprozess.

Weitere Merkmale der Erfindung gehen aus der nachfolgenden Figurenbeschreibung des Ausführungsbeispiels und den Zeichnungen hervor. Der Profildichtungsrohling kann nicht nur gehaltert, sondern bei einer Ausführungsvariante der Erfindung auch eingerollt werden. Dies kann grundsätzlich über einen Gegenhalter oder einen Klemmbalken bzw. eine Klemmbacke bewerkstelligt werden. Es kann aber auch wenigstens eine Andrückrolle zum Einrollen eines Teils des Profils als Teil der Ladestation bzw. der Transportvorrichtung vorgesehen sein. Dazu wird mit der Andrückrolle gegen einen Teil, zum Beispiel gegen eine Lippe des Rohlings, gedrückt. Anstelle einer Andrückrolle, die in Kontakt mit dem Profilrohling abrollen kann, kann auch ein Stift oder eine Backe verwendet werden.

Dabei zeigen:
- Figur 1: eine schematische Darstellung eines Bearbeitungsprozess für einen Profildichtungsrohling,
- Figur 2: eine schematische Darstellung der Halte- und Vorrichtungselemente zum Zeitpunkt der Übergabe des Profildichtungsrohlings an die Profilhalterung sowie
- Figuren 3 bis 5: eine schematische Darstellung eines Andrückvorgangs bei der Halterung und Handhabung des Profildichtungsrohlings an die Profilhalterung.

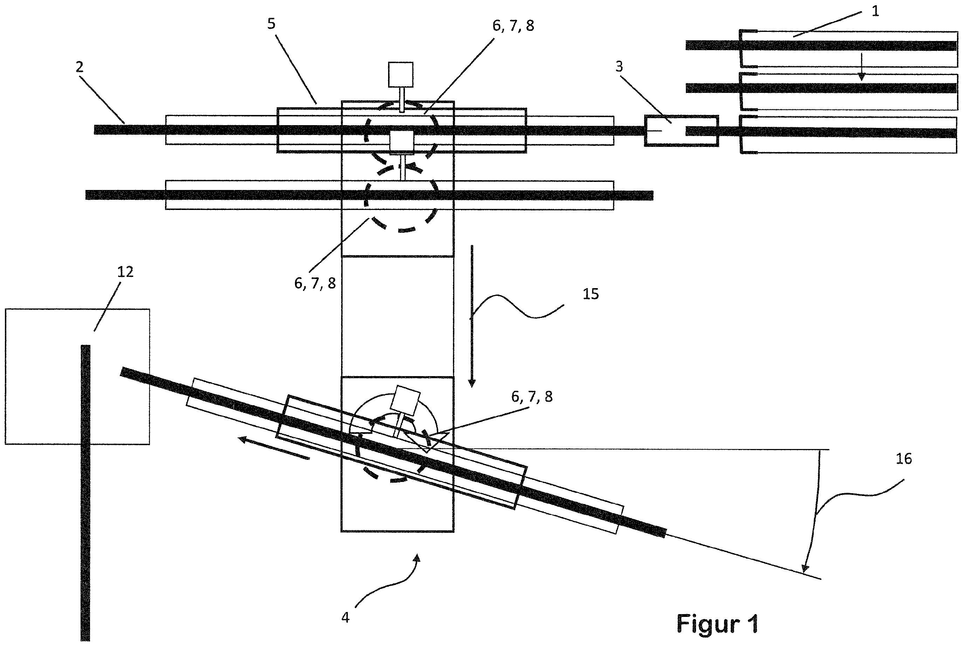

In der Figur 1 sind die für eine Bearbeitung eines biegeschlaffen Profildichtungsrohlings 2 erforderlichen Anlagenelemente in einer schematischen Darstellung gezeigt, wobei der Profildichtungsrohling 2 ausgehend von einem Magazin 1 zur Lagerung von Profildichtungsrohlingen 2 mittels einer Ladestation 3 an eine Transportvorrichtung 4 zur weiteren Bearbeitung übergeben wird.

Die in dem Magazin 1 nebeneinander gelagerten Profildichtungsrohlinge 2 werden an einer Ausgabeposition des Magazins 1 von der Ladestation 3 in eine auf der Transportvorrichtung 4 angeordnete Profilhalterung 5 eingeführt.

Die Entnahme eines Profildichtungsrohlings 2 aus dem Magazin 1 und nachfolgende Übergabe an die in der Transportvorrichtung 4 angeordnete Profilhalterung 5 kann beispielsweise durch entsprechende, in der Ladestation 3 angeordnete Greifelemente durchgeführt werden. Hierzu greift ein entsprechend ausgebildeter Greifer der Ladestation 3 an einem freien Ende des Profildichtungsrohlings 2 an, wobei der Profildichtungsrohling 2 durch eine Linearbewegung der Ladestation 3 in axialer Richtung des Profildichtungsrohlings 2 in eine in der Transportvorrichtung 4 angeordnete Profilhalterung 5 eingeführt wird. Statt einer Linearbewegung kann der Profildichtungsrohling grundsätzlich auf jeder denkbaren Kurvenform bewegt werden, etwa durch einen Roboter.

Für eine verbesserte Übergabe des Profildichtungsrohlings 2 an die Transportvorrichtung 4 weist diese Mittel 6, 7, 8 zur Bewegung und Positionierung auf, welche die Profilhalterung 5 mittels einer Dreh- bzw. Schwenk-, Linear-, Hub- und/oder Kippbewegung derart in Position bringt, dass eine störungsfreie Übergabe eines Profildichtungsrohlings 2 aus dem Magazin 1 in die Profilhalterung 5 ermöglicht werden kann.

Nach dem Einführen eines Profildichtungsrohlings 2 in die Profilhalterung 5 wird diese durch die Transportvorrichtung 4 mittels einer Linearbewegung 15 zu einer ersten bzw. einer weiterführenden Bearbeitungsstation transportiert.

Die Profilhalterung 5 weist in dem hier dargestellten Ausführungsbeispiel eine Klemmbacke 10 und einen Klemmbalken 11 auf, deren Querschnittsprofil an den Querschnitt des Profildichtungsrohlings 2 angepasst ist. Dadurch kann ein form- und gegebenenfalls auch ein kraftschlüssiges Halten der Profildichtungsrohlinge 2 in der Profilhalterung 5 ausgeführt werden. Die Klemmbacke bzw. der Klemmbalken 11 füllt vorliegend den Raum formschlüssig zwischen zwei Dichtlippen aus.

Zusätzlich kann ein in der Ladestation 3 angeordneter Gegenhalter 9 an die Profilhalterung 5 übergeben werden und von dieser während des gesamten Bearbeitungsprozesses des Profildichtungsrohlings 2 mitgeführt werden. Die in der Profilhalterung 5 angeordnete Klemmbacke 10 bzw. Klemmbalken 11 weisen in den zu bearbeitenden Bereichen des Profildichtungsrohlings 2 entsprechende Bearbeitungsausnehmungen auf, die den jeweiligen Bearbeitungspositionen des Profildichtungsrohlings 2 angepasst sind. Aufgrund dieser Bearbeitungsausnehmungen ist ein erneutes Anordnen eines Profildichtungsrohlings 2 in der Profilhalterung 5 für Bearbeitungsschritte mit wechselnden Positionen nicht erforderlich.

Darüber hinaus ist die Längenabmessung der Profilhalterung 5 an die Längenabmessung des Profildichtungsrohlings 2 derart angepasst, dass die Endbereiche des Profildichtungsrohlings 2 die Profilhalterung 5 für eine Bearbeitung in den Endbereichen des Profildichtungsrohlings 2 überragen.

Aufgrund der in der Transportvorrichtung 4 angeordneten Mittel 6, 7, 8 zur Bewegung, Positionierung und Bearbeitung des Profildichtungsrohlings 2 kann beispielsweise die Position des Profildichtungsrohlings 2 durch entsprechende Bewegung des Profilhalterung (5) in die jeweilige Bearbeitungsposition in einer Bearbeitungsstation bewegt werden, um eine Bearbeitung des Profildichtungsrohlings 2 ausführen zu können.

In der in Figur 1 gezeigten Darstellung wird der bearbeitete Profildichtungsrohling 2 nach Abschluss der Bearbeitung an ein Magazin 12 für Fertigteile übergeben, wobei die Übergabe von der des Profildichtungsrohlings 2 zum Magazin 12 manuell oder automatisiert mittels eine weiteren Ladestation (hier nicht dargestellt) durchgeführt werden kann.

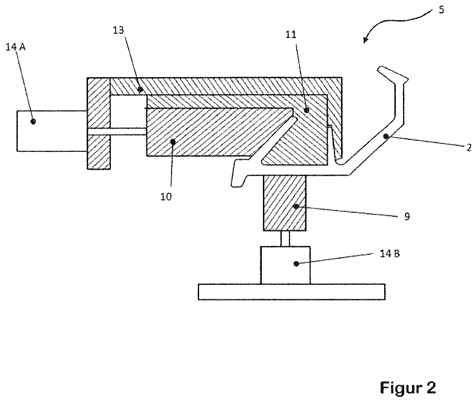

In Figur 2 ist eine schematische Darstellung einer Profilhalterung 5 im Querschnitt dargestellt, wobei die Profilhalterung 5 einen Grundrahmen 13 umfasst, welcher zur Aufnahme und Befestigung eines Klemmbalkens bzw. einer Klemmbacke 10 ausgebildet ist.

Am Grundrahmen 13 sind eine Klemmbacke 10 und ein Klemmbalken 11 befestigt, welche den Profildichtungsrohling 2 in der Profilhalterung 5 fixieren. Grundsätzlich können Klemmbacken bzw. Klemmbalken auch in den Grundrahmen integriert sein.

In der in Figur 2 dargestellten Ausführungsform der Profilhalterung 5 werden die Klemmbacke 10 und der Klemmbalken 11 durch ein entsprechendes Antriebsmittel 14 A innerhalb des Grundrahmens 13 der Profilhalterung 5 linear bewegt und führen somit einen Klemmvorgang des Profildichtungsrohlings 2 in der Profilhalterung 5 aus. Zusätzlich weist der hier dargestellte Grundrahmen 13 auf seiner nach innen gerichteten Innenoberfläche in Gegenüberstellung des Profildichtungsrohlings 2 einen dem Profil des Profildichtungsrohlings 2 angepassten Oberflächenverlauf auf, welcher als eine so genannte feststehende Klemmbacke zu verwenden ist. Es können mehrere Antriebsmittel vorgesehen sein.

Für ein verbessertes Klemmverhalten des Profildichtungsrohlings 2 in der Profilhalterung 5 weist dieser einen Gegenhalter 9 auf, welcher ein form- und kraftschlüssiges Klemmen verbessert. Dieser Gegenhalter 9 kann eine manuelle oder mittels eines angeordneten Antriebsmittels 14B eine automatisierte Klemmbewegung ausführen.

Der Gegenhalter 9 kann als Vorrichtungselement der Profilhalterung 5 oder als Vorrichtungselement der Ladestation 3 ausgebildet sein. Als Teil der Profilhalterung kann der Gegenhalter 9 für eine verbesserte Übergabe des Profildichtungsrohlings 2 vom Magazin 1 zur Profilhalterung 5 von der Ladestation 3 an die Profilhalterung 5 übergeben wird und während des gesamten Bearbeitungszyklus des Profildichtungsrohlings von diesem mitgeführt werden.

Grundsätzlich ist es denkbar, dass die Klemmbacke formschlüssig ausgebildet ist und so am Profildichtungsrohling angreift, dass dieser durch diese geometrische Vorgabe und/oder die Reibungskräfte, die bei einem Herausrutschen des Rohlings wirken würden, nicht herausrutschen kann. Es ist auch denkbar, dass der Rohling durch aktive Krafteinwirkung, gegebenenfalls zusätzlich, gehalten wird.

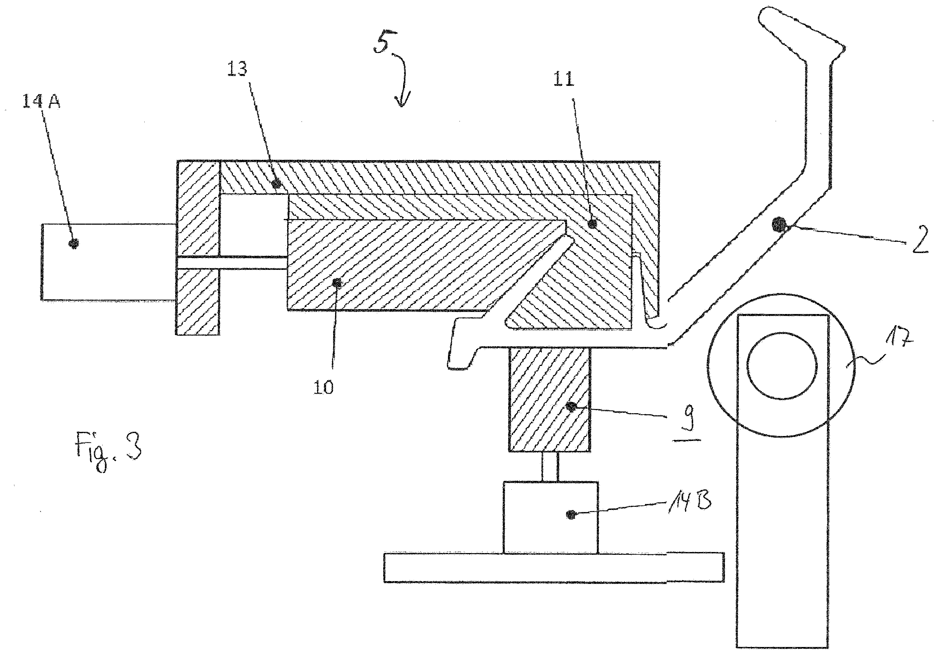

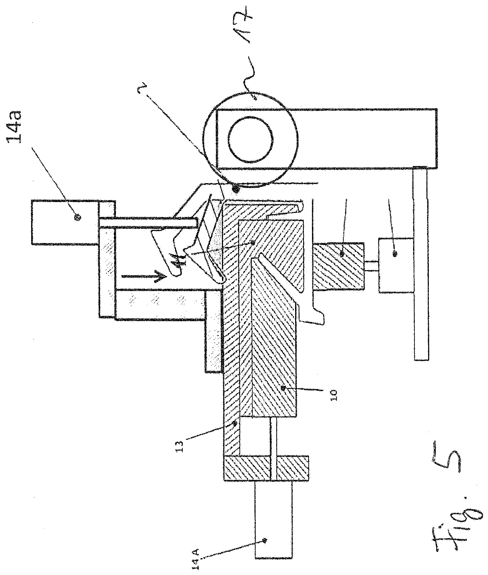

Die Figuren 3 bis 5 zeigen, dass zusätzlich durch die Robotertechnik eine Erweiterung der Funktion des Greifens an der Profilhalterung erfolgen kann, da die Bewegungen für das Andrücken bzw. Einrollen des Profildichtungsrohlings an die Halterung durch einen Roboter erfolgen können. Die eigentliche Klemmfunktion wird in die Profilhalterung sodann integriert. Vorteil dieser Ausführungsform ist es, dass das Profil bzw. der Profildichtungsrohling, bevor dieser in die jeweilige Station zur Bearbeitung eingeführt wird, in die jeweils optimale Position für diesen Bearbeitungsschritt gebracht und so gehalten werden kann.

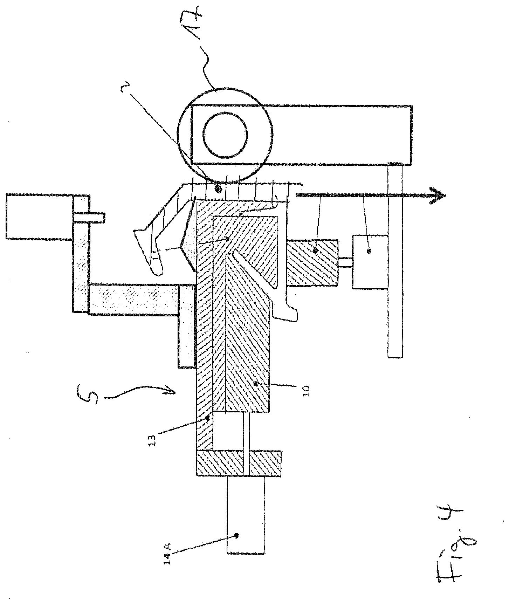

Hinsichtlich des Ablaufs wird nach einer Klemmung des Profildichtungsrohlings 2 über die Klemmbacke 10, wie dies in Figur 2 zum Beispiel dargestellt ist, das Profil, sofern erforderlich, in dieser Position bearbeitet. Anschließend wird mit Hilfe der Andrückrolle 17 ein freier Schenkel des Profildichtungsrohlings 2 angedrückt. Dazu wird die gesamte Vorrichtung, welche den Profildichtungsrohling 2 hält/haltert gegen die Andrückrolle 17 verfahren. Die Situation, in welcher der Schenkel an die Profilhalterung 5 bzw. an den Grundrahmen 13 gedrückt wird, ist in Figur 4 dargestellt. Die gesamte Profilhalterung 5 kann sodann zusammen mit dem Profildichtungsrohling 2 und der Andrückrolle 17 verfahren werden.

Über einen Stößel der zusätzlichen Antriebsmittel 14A wird der noch verbleibende Teilschenkel des Profildichtungsrohlings gegen den Grundrahmen 13 bzw. gegen die Profilhalterung 5 gedrückt. Diese Schritte sind gegebenenfalls notwendig, um die weitere Bearbeitung gewährleisten zu können. Wiederum kann die gesamte Profilhalterung 5 einschließlich Andrückrolle 17 und Antriebsmittel 14A verfahren werden.

### Bezugszeichenliste:

- 1: Magazin (Rohling)
- 2: Profildichtungsrohling
- 3: Ladestation
- 4: Transportvorrichtung
- 5: Profilhalterung
- 6: Mittel zur Bewegung, Positionierung, Bearbeitung
- 7: Mittel zur Bewegung, Positionierung, Bearbeitung
- 8: Mittel zur Bewegung, Positionierung, Bearbeitung
- 9: Gegenhalter
- 10: Klemmbacke
- 11: Klemmbalken
- 12: Magazin (Fertigteil)
- 13: Grundrahmen
- 14A: Antriebsmittel Klemmbacke
- 14B: Antriebsmittel Gegenhalter
- 15: Linearbewegung
- 16: Schwenkbewegung
- 17: Andrückrolle

## Patentansprüche

1. Verfahren zur Fertigung einer Profildichtung aus einem Profildichtungsrohling (2), welcher vorzugsweise biegeschlaffe Eigenschaften aufweist, wobei der Profildichtungsrohling (2) in einer Profilhalterung (5) aufgenommen und gehalten wird, indem entweder der Profildichtungsrohling in die Profilhalterung eingeschoben oder die Profilhalterung auf den Profildichtungsrohling geschoben wird, wobei als Profilhalterung (5) eine solche verwendet wird, die zur Handhabung und zum Transport eines Profildichtungsrohlings (2) in einem wenigstens teilweise automatisierten Fertigungsprozess ausgebildet ist, wobei die Profilhalterung (5) wenigstens eine Klemmbacke (10) umfasst, welche dazu ausgebildet ist, form- und/oder kraftschlüssig an wenigstens einer Teilfläche des Profildichtungsrohlings (2) anzuliegen,
wobei die Profilhalterung (5) mit dem darin angeordneten Profildichtungsrohling (2) in einer Aufnahmevorrichtung einer Transportvorrichtung zum Transport eines Profildichtungsrohlings (2) in einem wenigstens teilweise automatisierten Fertigungsprozess aufgenommen wird,
wobei der nachfolgende Verfahrenschritt ausgeführt wird:
- Transport der Profilhalterung (5) zum und/oder im Fertigungsprozess, **dadurch gekennzeichnet, dass** die gesamte Profilhalterung an ein entsprechendes Transportsystem übergeben wird, sodass mehrere Profilhalterungen zeitgleich im Transportsystem transportiert werden können.

2. Verfahren nach einem der vorgenannten Ansprüche, **dadurch gekennzeichnet dass**, die Profilhalterung Bearbeitungsausnehmungen zur Bearbeitung des Profildichtungsrohlings (2) aufweist.

3. Verfahren nach einem der vorgenannten Ansprüche, **dadurch gekennzeichnet dass** die Profilhalterung derart ausgebildet ist, dass der Profildichtungsrohling (2) zur Bearbeitung die Profilhalterung (5) an ihren Längs- und/oder Stirnkanten überragt.

4. Verfahren nach einem der vorgenannten Ansprüche, **dadurch gekennzeichnet dass** die Profilhalterung einen Grundrahmen (13) zur Lagerung der Klemmbacke (10) umfasst.

5. Verfahren nach einem der vorgenannten Ansprüche, **dadurch gekennzeichnet dass** wenigstens einer der nachfolgenden Verfahrensschritte ausgeführt wird:
- Positionieren der Profilhalterung (5);
- Bearbeiten des Profildichtungsrohlings (2).

6. Verfahren nach einem der Ansprüche 1 bis 5, **dadurch gekennzeichnet, dass** der Gegenhalter (9) mit dem Profildichtungsrohling (2) mitgeführt wird.

## Claims

1. A method for manufacturing a profile seal from a profile seal blank (2), which preferably has flexible properties, wherein the profile seal blank (2) is received and held in a profile holder (5) in that either the profile seal blank is inserted into the profile holder or the profile holder is pushed onto the profile seal blank,
wherein such a profile holder (5) is used which is designed for handling and transporting a profile seal blank (2) in an at least partially automated manufacturing process, wherein the profile holder (5) comprises at least one clamping jaw (10), which is designed to rest against at least one partial surface of the profile seal blank (2) in a form- and/or force-fitting manner,
wherein the profile holder (5) with the profile seal blank (2) arranged therein is received in a receiving device of a transport device for transporting a profile seal blank (2) in an at least partially automated manufacturing process,
wherein the following method step is carried out:
- transporting of the profile holder (5) for and/or in the manufacturing process,
**characterised in that** the entire profile holder is transferred to a corresponding transport system so that a plurality of profile holders can be transported simultaneously in the transport system.

2. The method according to one of the preceding claims, **characterised in that** the profile holder has machining recesses for machining the profile seal blank (2).

3. The method according to one of the preceding claims,
**characterised in that** the profile holder is designed in such a manner that, for machining, the profile seal blank (2) projects beyond the profile holder (5) at the longitudinal and/or end edges thereof.

4. The method according to one of the preceding claims,
**characterised in that** the profile holder comprises a base frame (13) for mounting the clamping jaw (10).

5. The method according to one of the preceding claims,
**characterised in that** at least one of the following method steps is carried out:
- positioning of the profile holder (5);
- machining of the profile seal blank (2).

6. The method according to one of claims 1 to 5,
**characterised in that** the counter-holder (9) is carried along with the profile seal blank (2).

## Revendications

1. Procédé de fabrication d'un joint de profilé à partir d'une ébauche (2) de joint de profilé, qui présente de préférence des caractéristiques de flexibilité, l'ébauche(2)de joint de profilé étant logé et maintenu dans un élément de retenu(5) de profilé, l'ébauche de joint de profilé étant soit introduite dans l'élément de retenue de profilé soit l'élément de retenue de profilé étant poussé sur l'ébauche de joint de profilé,
on utilise comme élément de retenue (5)de profilé un tel élément, qui est conçu pour manipuler et pour transporter une ébauche (2) de joint de profilé dans un processus de fabrication au moins en partie automatisé, l'élément de retenue(5) de profilé comprenant au moins une mâchoire (10) de serrage qui est conçue être posée par complémentarité de forme et/ou à force sur au moins une face partielle de l'ébauche (2) de joint de profilé,
l'élément de retenue (5) de profilé étant logé avec l'ébauche (2) de joint de profilé disposée en son sein dans un dispositif de réception d'un dispositif de transport destiné à transporter une ébauche (2) de joint de profilé dans un processus de fabrication au moins en partie automatisé,
l'étape suivante de procédé étant exécutée :
- transport de l'élément de retenue (5) de profilé vers et/ou dans le processus de fabrication,
**caractérisé en ce que** l'élément de retenue de profilé tout entier est transféré sur un système de transport correspondant, de sorte que plusieurs éléments de retenue de profilé puissent être transportés simultanément dans le système de transport.

2. Procédé selon l'une des revendications précédentes, **caractérisé en ce que** l'élément de retenue de profilé comprend des évidements d'usinage pour l'usinage de l'ébauche (2) de joint de profilé.

3. Procédé selon l'une des revendications précédentes, **caractérisé en ce que** l'élément de retenue de profilé est conçu de telle sorte que l'ébauche (2) de joint de profilé destiné à l'usinage de l'élément de retenue (5) de profilé fasse saillie sur son arête frontale et/ou longitudinale.

4. Procédé selon l'une quelconque des revendications précédentes, **caractérisé en ce que** l'élément de retenue de profilé comprend un cadre de base (13) destiné à loger la mâchoire (10) de serrage.

5. Procédé selon l'une quelconque des revendications précédentes, **caractérisé en ce qu'**au moins une des étapes suivantes de procédé est exécutée :
- positionnement de l'élément de retenue (5) de profilé ;
- usinage de l'ébauche (2) de joint de profilé.

6. Procédé selon l'une quelconque des revendications 1 à 5, **caractérisé en ce que** la butée (9) est acheminée avec l'ébauche (2) de joint de profilé.
